# EUROPEAN PATENT SPECIFICATION

(11) **EP 2 631 962 B1**
(45) Date of publication and mention of the grant of the patent: **26.04.2017**
(21) Application number: 12827342.2
(22) Date of filing: 23.08.2012
(51) Int. Cl.: H01M 2/02, H01M 10/052, H01M 10/0562, H01M 10/0565, H01M 10/0585, H01M 10/04

(54) **THIN BATTERY**
DÜNNBATTERIE
BATTERIE MINCE

(30) Priority: 29.08.2011 JP 2011185769
(43) Date of publication of application: 28.08.2013
(73) Proprietor: Panasonic Intellectual Property Management Co., Ltd., Osaka-shi, Osaka 540-6207 (JP)
(72) Inventor: UEDA, Tomohiro, Osaka 540-6207 (JP)
(74) Representative: TBK
(86) International application number: PCT/JP2012/005271
(87) International publication number: WO 2013/031148

(56) References cited:
- WO-A1-2012/001885
- JP-A- H05 182 649
- JP-A- 2001 068 074
- JP-A- 2001 068 074
- JP-A- 2001 256 953
- JP-A- 2002 151 018
- JP-A- 2002 151 019
- JP-A- 2002 151 019
- JP-A- 2003 031 265
- JP-A- 2004 311 351
- JP-A- 2005 116 482
- JP-A- 2006 134 697
- US-A1- 2003 134 190
- US-A1- 2010 028 775
- US-B1- 6 284 406

## Description

### [Technical Field]

The present invention relates to a thin battery with flexibility, and further relates to an improved housing for accommodating an electrode assembly.

### [Background of Invention]

In recent years, with electronic devices offered in smaller sizes and with higher performance, the battery used therein as the power source is required to be in smaller size and with lighter weight. As such a battery, development is in progress for a thin battery to be used in the fields of IC cards having a microchip embedded therein, of RFID (Radio Frequency Identification), etc.

Known as an exemplary thin battery, are batteries as disclosed in Patent Literature 1, 2, 3 and 4. The batteries of Patent Literature 1 and 2 are produced by inserting an electrode assembly in sheet form into a pouch-type housing formed from a laminate film, and then sealing the housing at its opening by thermal welding. The batteries of Patent Literature 3 and 4 are produced by laminating an electrode assembly in sheet form and laminate films of the housing through a spacer, and then sealing the laminate films under reduced pressure. The laminate films of Patent Literature 1, 3 and 4 comprise an aluminum foil with resin films laminated to both surfaces, respectively, thereof. The laminate film of Patent Literature 2 is composed by stacking a gas barrier layer formed of inorganic oxide and a second resin film in recited order on a first resin film.

Moreover, for example, Patent Literature 5 discloses as a housing for a thin battery, a battery package comprising: a flexibly polymeric base film for attachment to a battery; and a flexible inorganic material layer deposited on the base film, which enables the battery to be encapsulated in the battery package. Furthermore, Patent Literature 6 discloses a thin battery comprising a battery assembly having two active material layers of a first polarity carried on inner surfaces of metal sheets serving as a current collector of the active material layers of the first polarity, an active material layer of a second polarity carried on a current collector disposed between the two active material layers of the first polarity, and a resin layer laminated on an outer surface of the current collectors carrying the active material layers of the first polarity.

On the other hand, in recent years, developments have been in progress for a dermal administration device (iontophoretic dermal administration device) which uses the principle of iontophoresis, as disclosed in Patent Literature 7. Iontophoresis is a method in which voltage is applied to pass between one electrode under which an ionic medicine is placed, and the other electrode, thus producing an electric field therebetween and accelerating the ionic medicine to permeate the subcutaneous tissue.

### [Prior Art]

### [Patent Literature]

[Patent Literature 1] JP 2000-285881 A
[Patent Literature 2] JP 2001-068074 A
[Patent Literature 3] JP 2002-151018 A
[Patent Literature 4] JP 2002-151019 A
[Patent Literature 5] JP H06-231739 A
[Patent Literature 6] US 2003/0134190 A1
[Patent Literature 7] JP 2011-092543 A

### [Summary of Invention]

### [Technical Problem]

With respect to a conventional thin battery that has been used as the power source for an IC card, since the IC card itself has stiffness and the thin battery is supported by the IC card, the level of flexibility required for the thin battery has been sufficient, even when lower than that of the card. Usually, an IC card is not used in a manner of being bent to an acute angle of, for example 90 degrees or less. In contrast, with respect to devices used in contact with the skin of a living body, such as an iontophoretic dermal administration device and a biological information acquisition device for acquiring biological information, the thin battery used therein is required to be thinner, and also to greatly deform with the movement of the skin, because a living body is physically active while in contact with the device. To increase the degree of freedom in designing such devices, a thin battery having a higher level of flexibility is currently in demand. In the case where a conventional thin battery with insufficient flexibility is used as the power source for a device used in contact with the skin of a living body, when the device is attached to a living body for use, its excessive stiffness may cause an abnormal sensation to the user.

An object of the present invention is to provide a thin battery with excellent flexibility in at least one direction.

### [Solution to Problem]

A first aspect of the present invention is directed to a thin battery comprising the features defined in claim 1, a second aspect of the present invention is directed to a thin battery comprising the features defined in claim 2, a third aspect of the present invention is directed to a device comprising the features defined in claim 6, and a fourth aspect of the present invention is directed to use of the device by bringing the device in contact with the skin of a living body, in particular with a curved part such as an arm of a human body.

In the first and second aspects of the present invention, it is preferable that the average tensile elastic modulus of the laminate film is, for example, 700 MPa or less.

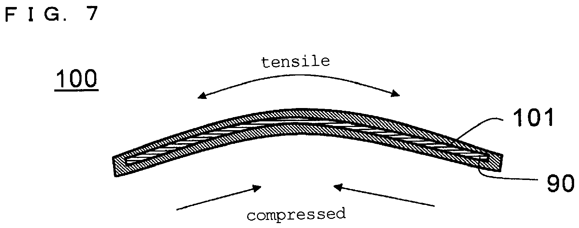

When the present inventors conducted studies on the mechanical behavior of the thin battery during bending, they found out that the mechanical properties of the housing, which had not been paid attention to in the past, greatly affected the flexibility of the thin battery. Specifically, as illustrated in Fig. 7, when a thin battery 100 comprising an electrode assembly 90 was bent, the outer side of a housing 101 became tensile while the inner side thereof became compressed; and thus, the present inventors found out that the housing 101 greatly affected the flexibility of the thin battery 100.

Conventionally, widely used as the housing for a thin battery, was a laminate film comprising a gas barrier layer, being a thick aluminum foil, laminated with a resin layer. With respect to the present invention, the present inventors barrier layer such as a thick aluminum foil, enabled remarkable improvement in tensile properties of the housing for a thin battery.

When a thin gas barrier layer is used, gas barrier properties of the housing deteriorate to a certain extent when the battery is intended for long term use. In contrast, excessively high gas barrier properties are not required of the housing when the battery is intended for short term use. Moreover, a thin battery with excellent flexibility is obtained, by inserting an electrode assembly having a bending elastic modulus of 300 MPa or less in a housing made of a laminate film including a gas barrier layer having an average thickness of 30 µm or less; and by making the total thickness of the electrode assembly and the film-made housing, 1.0 mm or less.

To prevent the user from having an abnormal sensation when using a device for use in contact with the skin of a living body, the bending elastic modulus of the thin battery as the power source of the device may be 200 MPa or less, and preferably 100 MPa or less, when measured by a method that will be given later. The reason why the bending elastic modulus of the thin battery particularly affects the sensation felt by the user, is presumably due to the relatively large area of the thin battery, and to the thin battery being made of materials with relatively poor flexibility

When the gas barrier layer includes a vapor-deposited film of a metal material, higher flexibility is obtained. Thus, for example, storage characteristics are less prone to deteriorate even with repeated bending. Such a vapor-deposited film has high elasticity, and also has excellent oxidation resistance. Examples of the material for forming the vapor-deposited film include metal materials such as aluminum, titanium, nickel, iron, platinum, gold, silver, and palladium.

Moreover, in the first aspect of the present invention, the electrode assembly comprises the electrode structure which includes: the positive electrode including a positive electrode current collector, and two positive electrode active material layers formed on both surfaces, respectively, of the positive electrode current collector; two of the electrolyte layers disposed on both surfaces, respectively, of the positive electrode; two negative electrode active material layers disposed on the two electrolyte layers, respectively; and two negative electrode current collectors disposed on the two negative electrode active material layers, respectively, in which the two negative electrode current collectors are electrically connected to each other. This ensures larger capacity, while also maintaining high flexibility Moreover, according to the second aspect of the present invention, the positive electrode and the negative electrode may be interchanged in the above structure.

That is, in the foregoing thin battery, the electrode assembly may comprise the electrode structure which includes: the positive electrode; two of the negative electrodes arranged so as to sandwich the positive electrode; and two of the electrolyte layers, one interposed between the positive electrode and one of the negative electrodes, and the other interposed between the positive electrode and the other of the negative electrodes. In this case, the positive electrode includes a positive electrode current collector, and two positive electrode active material layers formed on both surfaces, respectively, of the positive electrode current collector; the two negative electrodes each include a negative electrode current collector, and a negative electrode active material disposed on one surface of the negative electrode current collector so as to be in contact with the electrolyte layer; and the two negative electrodes are electrically connected to each other.

Alternatively, the electrode assembly may comprise the electrode structure which includes: the negative electrode; two of the positive electrodes arranged so as to sandwich the negative electrode; and two of the electrolyte layers, one interposed between the negative electrode and one of the positive electrodes, and the other interposed between the negative electrode and the other of the positive electrodes. In this case, the negative electrode includes a negative electrode current collector, and two negative electrode active material layers formed on both surfaces, respectively, of the negative electrode current collector; the two positive electrodes each include a positive electrode current collector, and a positive electrode active material disposed on one surface of the positive electrode current collector so as to be in contact with the electrolyte layer; and the two positive electrodes are electrically connected to each other.

### [Advantageous Effects of Invention]

According to the present invention, it is possible to provide a thin battery with excellent flexibility.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

Fig. 1 is a partially cutaway oblique view of a thin battery 10 according to an embodiment of the present invention.
Fig. 2 is a vertical sectional view taken along line I-I' of Fig. 1.
Fig. 3 is a vertical sectional view of a laminate film 14 which forms a film-made housing 4.
Fig. 4 is a vertical sectional view of a thin battery 20 according to another embodiment of the present invention.
Fig. 5 is a conceptual drawing which illustrates an example of usage of an electronic device equipped with the thin battery 10.
Fig. 6 is an explanatory drawing to explain the method of measuring the capacity retention rate after bending and storing according to the Examples.
Fig. 7 is an explanatory drawing to explain the manner in which force is applied to a thin battery when bent.

### [Description of Embodiments]

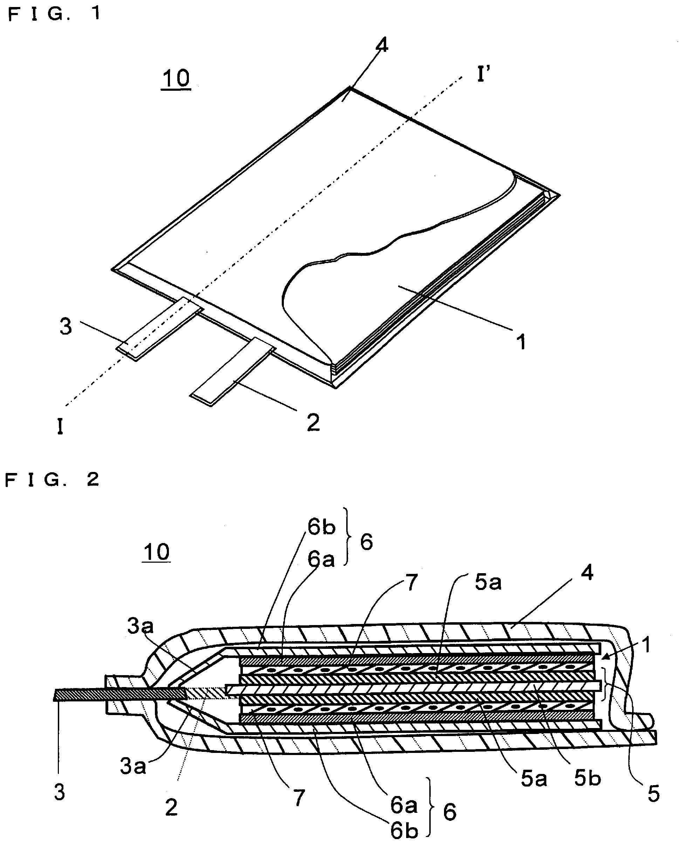

One embodiment of a thin battery of the present invention will be described with reference to drawings. Fig. 1 is a partially cutaway oblique view of a thin battery 10 of the present embodiment. The thin battery 10 of the present embodiment is a non-aqueous electrolyte battery which uses a laminate film for its housing. In Fig. 1, an electrode assembly 1 is hermetically sealed in a film-made housing 4, whereas a positive lead 2 and a negative lead 3 extend out of the film-made housing 4, the positive lead 2 connected to a positive electrode current collector in a positive electrode included in the electrode assembly 1, and the negative lead 3 connected to a negative electrode current collector in a negative electrode included in the electrode assembly 1.

As illustrated in Fig. 1, the thin battery 10 is formed by having the electrode assembly 1 in sheet form hermetically sealed in the film-made housing 4. The electrode assembly 1 comprises an electrode structure which is a laminate comprising a positive electrode, a negative electrode, and an electrolyte layer interposed therebetween. The positive lead 2 and the negative lead 3, which extend out of the film-made housing 4, are used as a positive terminal and a negative terminal, respectively.

Fig. 2 is a vertical sectional view taken along line I-I' of Fig. 1. As illustrated in Fig. 2, the electrode assembly 1 comprises an electrode structure which is a laminate including: a positive electrode 5 capable of absorbing and releasing lithium; two negative electrodes 6 each capable of absorbing and releasing lithium; and two electrolyte layers 7, one interposed between the positive electrode 5 and one of the negative electrodes 6, and the other interposed between the positive electrode 5 and the other of the negative electrodes 6. The positive electrode 5 includes: a positive electrode current collector 5b; and positive electrode active material layers 5a arranged on both surfaces, respectively, of the positive electrode current collector 5b. The two negative electrodes 6 each include: a negative electrode current collector 6b; and a negative electrode active material layer 6a arranged on one surface of the negative electrode current collector 6b. Moreover, the electrolyte layers 7 are each interposed between the positive electrode active material layer 5a and the negative electrode active material layer 6a. In the thin battery 10, to secure battery capacity, there are two sets of laminates (electrode structures) including the positive electrode active material layer 5a, the negative electrode active material layer 6a, and the electrolyte layer 7 interposed therebetween. However, the constitution of the present invention is not limited to the above, and may include one set of the electrode structure, or three or more sets of the electrode structures. Moreover, the positive electrode and the negative electrode may be arranged interchangeably.

The positive electrode active material layer 5a is formed, for example, by applying a slurry for positive electrode active material layer formation on the surface of the positive electrode current collector 5b; and then drying and rolling the resultant. The slurry for positive electrode active material layer formation is prepared, for example, by blending a positive electrode active material, a binder, and a conductive agent in a dispersing medium; and then mixing the resultant.

Specific examples of the positive electrode active material include: manganese dioxide; fluorinated graphite; thionyl chloride; lithium-containing composite oxides such as a lithium cobalt oxide, a lithium nickel oxide, and a lithium manganese oxide; olivine-type lithium phosphates expressed by LiYPO₄ and Li₂YPO₄F, where Y is at least one selected from the group consisting of Co, Ni, Mn, and Fe.

Specific examples of the binder include polyvinylidene fluoride, polytetrafluoroethylene, polyhexafluoropropylene, styrene- butadiene rubber, and modified acrylic rubber.

Specific examples of the conductive agent include: graphites such as natural graphite and artificial graphite; carbon blacks such as acetylene black, ketjen black, channel black, furnace black, lamp black, and thermal black; and conductive fibers such as carbon fibers and metal fibers.

Specific examples of the dispersing medium include dimethylformamide, dimethylacetamide, methylformamide, N-methyl-2-pyrollidone, dimethylamine, acetone, and cyclohexanone.

Specific examples of the positive electrode current collector include metal foils made of materials such as stainless steel, titanium, aluminum, and an aluminum alloy. The positive electrode current collector may be, in place of a metal foil, a thin film formed by plasma-enhanced chemical vapor deposition (PVD) or chemical vapor deposition (CVD).

The negative electrode active material layer 6a is formed, for example, by applying a slurry for negative electrode active material layer formation on the surface of the negative electrode current collector 6b; and then drying and rolling the resultant. The slurry for negative electrode active material layer formation is prepared, for example, by blending a negative electrode active material, a binder, and as necessary, a conductive agent or the like, in a dispersing medium; and then mixing the resultant.

Specific examples of the negative electrode active material include: lithium and lithium alloy; carbon materials such as graphite-based materials; and alloy-formable negative electrode active materials such as silicon-based active materials and tin-based active materials, capable of absorbing lithium through alloy formation with lithium during charge and of releasing lithium during discharge, under a negative electrode potential.

The binder, dispersing medium, and conductive agent may be selected from those listed for the positive electrode.

Specific examples of the negative electrode current collector include metal foils made of materials such as copper, a copper alloy, stainless steel, titanium, and nickel. Moreover, the negative electrode current collector may also be, in place of a metal foil, a thin film formed by PVD or CVD.

The negative electrode active material layer may be formed by compression bonding a metal foil made of lithium or lithium alloy serving as the negative electrode active material, to the negative electrode current collector.

For the electrolyte layer 7, it is possible to use a polymer electrolyte, a solid electrolyte, a separator impregnated with a non-aqueous electrolyte solution, or the like. Among these, a polymer electrolyte and a solid electrolyte are particularly preferred, in terms of suppressing liquid leakage.

A polymer electrolyte is prepared, for example, by combining together, an electrolyte solution comprising a mixture of a lithium salt and a non-aqueous solvent, with a polymer matrix. Moreover, such a polymer electrolyte may be fixed by allowing it to permeate a separator or by applying it onto an electrode.

Specific examples of the lithium salt include LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lithium lower aliphatic carboxylate, LiCl, LiBr, Lil, LiBCl₄, borate salts, and imide salts.

Specific examples of the non-aqueous solvent include: cyclic carbonic acid esters such as propylene carbonate, ethylene carbonate, and butylene carbonate; chain carbonic acid esters such as diethyl carbonate, ethyl methyl carbonate, and dimethyl carbonate; and cyclic carboxylic acid esters such as γ-butyrolactone and γ-valerolactone.

Specific examples of the polymer for the polymer matrix include: fluorinated polymers such as polyvinylidene fluoride (PVdF), a copolymer comprising repeating units of vinylidene fluoride (VdF) and hexafluoropropylene (HFP), and a copolymer comprising repeating units of vinylidene fluoride (VdF) and trifluoroethylene (TFE); silicone gel; acrylic gel; acrylonitrile gel; a modified polyphosphazene polymer; polyethylene oxide; and polypropylene oxide, composite polymers thereof, cross-linked polymers thereof, and modified polymers thereof.

A solid electrolyte is prepared, for example, by deposition of a lithium ion conductive matter on the positive electrode active material layer or on the negative electrode active material layer, by PVD or CVD. A specific example of the lithium ion conductive matter is a lithium sulfide.

A separator impregnated with a non-aqueous electrolyte solution is prepared by impregnation of a non-aqueous electrolyte solution, which is prepared by mixing the foregoing lithium salt and non-aqueous solvent, into a separator, which is a microporous membrane made of resin interposed between the positive electrode active material layer and the negative electrode active material layer.

Specific examples of the microporous membrane made of resin that are preferably used, include microporous membranes formed from a resin, examples thereof including polyolefins such as polyethylene and polypropylene; and polyamides such as polyamide imide.

The positive lead 2 and the negative lead 3 are connected to the positive electrode current collector and the negative electrode current collector, respectively, by welding, etc. For the positive lead, for example, an aluminum lead is preferably used. For the negative lead, a copper lead, a copper alloy lead, or a nickel lead is preferably used. In the thin battery 10, as illustrated in Fig. 2, the two negative electrode current collectors 6b have welded portions (wirings) 3a, respectively. The welded portions 3a partially extend from end surfaces, respectively, of the two negative electrode current collectors 6b; and are welded and thus electrically connected to the negative lead 3.

As illustrated in Figs. 1 and 2, the electrode assembly 1 is in sheet form. Moreover, the bending elastic modulus of the electrode assembly 1 is 300 MPa or less, and preferably 10 to 200 MPa. By using an electrode assembly with such low bending elastic modulus, a thin battery with excellent flexibility is obtained. In order to obtain such an electrode assembly, each of its components is made thin, so as to make the thickness of the electrode assembly preferably 700 µm or less, further preferably 500 µm or less, and still further preferably 400 µm or less.

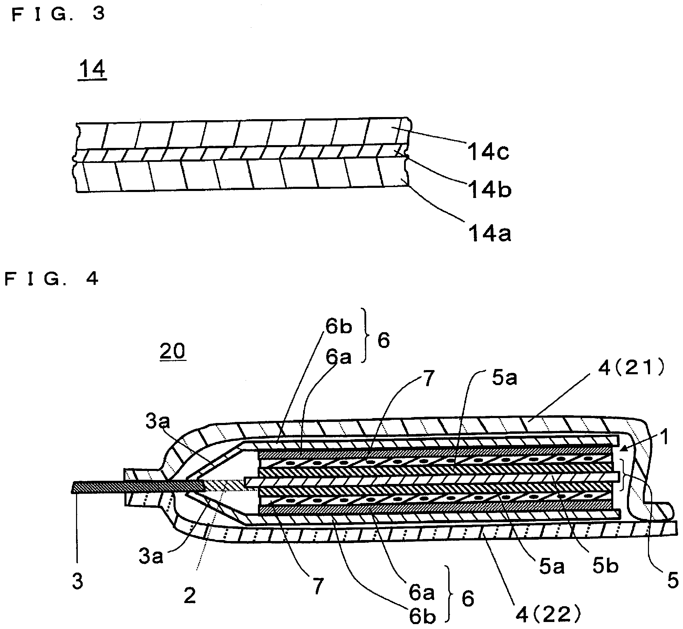

Next, with reference to Fig. 3, a detailed description will be given on a laminate film 14 which forms the film-made housing 4. Fig. 3 is a vertical sectional view of a laminate film 14 which forms the film-made housing 4. The laminate film 14 is a laminate comprising: a first resin film 14a; and a gas barrier layer 14b made of a metal or inorganic material and a second resin film 14c, that are laminated in this order, on one surface of the first resin film 14a.

The laminate film 14 is produced, by formation of the gas barrier layer 14b made from a metal material, on one surface of the first resin film 14 by vapor deposition or the like; followed by lamination of the second resin film 14c to the gas barrier layer 14b.

The resin which forms the first and second resin films is not particularly limited, and examples thereof include: polyolefins such as polyethylene and polypropylene; polyesters such as polyethylene terephthalate and polybutylene terephthalate; polyamides such as polyamide 6, polyamide 11, polyamide 12, polyamide 4,6, polyamaide 9T, and polyamide 6,6; and modified substances thereof.

The average thicknesses of the first resin film and the second resin film, respectively, are preferably 10 to 100 µm and further preferably 10 to 50 µm, in terms of maintaining flexibility while also maintaining reduction resistance properties, gas barrier properties, friction resistance properties, etc.

· The negative electrode active material, particularly that containing lithium, has high reduction properties; and tends to easily corrode when in contact with moisture in air, since it rapidly reacts with the moisture and becomes oxidized. The gas barrier layer 14b is arranged for the purpose of suppressing oxidation and corrosion of the negative electrode active material.

The gas barrier layer 14b is interposed between the first resin film 14a and the second resin film 14c; and may be, for example, a vapor-deposited film formed by vapor deposition, or that formed from a metal foil. Specific examples of vapor deposition include vacuum vapor deposition, sputtering, ion plating, laser abrasion, chemical vapor deposition, plasma-enhanced chemical vapor deposition, and thermal spraying. Among these, vacuum vapor deposition is particularly preferred.

The material used to form the gas barrier layer 14b includes a metal material, and an example thereof is a metal material capable of forming a vapor-deposited layer having a withstand voltage of 3 volts or more versus lithium (vs. Li⁺/Li). More specifically, a metal material such as aluminum, titanium, nickel, iron, platinum, gold, silver, and palladium is preferably used. Formation of a gas barrier layer with a high withstand voltage enables prevention of damages that are due to causes such as oxidation of the gas barrier layer itself.

The average thickness of the gas barrier layer is 30 µm or less, preferably 0.01 to 30 µm, and particularly preferably 0.02 to 20 µm. By making the average thickness of the gas barrier layer 30 µm or less, the resultant laminate film would have excellent flexibility; and as a result, the thin battery would also have good flexibility Moreover, by making the average thickness of the gas barrier layer 0.01 µm or more, it would be easier to secure gas barrier properties for the resultant laminate film.

The total thickness of such a laminate film is preferably 20 to 200 µm, and further preferably 30 to 160 µm. By making the total thickness of the laminate film be within the foregoing range, it would be easier to secure strength as well as gas barrier properties for the housing, and it would be possible to give the laminate film sufficient flexibility As a result, the thin battery would also have good flexibility.

The average tensile elastic modulus of the laminate film, measured by a method that will be described later, is 700 MPa or less, preferably 500 MPa or less, and further preferably 100 MPa or less. By using a laminate film with such a low tensile elastic modulus, a thin battery with excellent flexibility would be obtained. Although the lower limit of the average tensile elastic modulus is not particularly limited, it is preferably 10 MPa or more, in terms of practicality. Note that here, in the case where the housing is formed from one kind of the laminate film, the average tensile elastic modulus of the laminate film means the tensile elastic modulus of the laminate film. Furthermore, in the case where the housing is formed from two or more kinds of the laminate films, the average tensile elastic modulus of the laminate film means the result obtained from the following calculation: first, for each of the laminate films, the tensile elastic modulus is multiplied by the area occupied on the housing; and then, the results obtained by the above multiplication are added together. Specifically, in the case where the housing is formed from a first laminate film of an area S1 and a tensile elastic modulus X1 (MPa); and a second laminate film of an area S2 and a tensile elastic modulus X2 (MPa), the average tensile elastic modulus can be expressed by X1 × S1 / (S1 + S2) + X2 × S2 / (S1 + S2).

Among the laminate films, in terms of enabling excellent balance of flexibility, gas barrier properties, and mechanical properties, particularly preferred is a laminate film comprising the first resin film of a polyamide-based film or polyolefin film having an average thickness of 10 to 100 µm, and the second resin film of a polyolefin film having an average thickness of 20 to 100 µm; and having an average total thickness of 30 to 200 µm.

As illustrated in Figs. 1 and 2, the laminate film is used as a material to form the film-made housing 4 which is for hermetically accommodating the electrode assembly 1. For example, the peripheral edge portions of the laminate film that are cut to a predetermined size, are designated to serve as portions to be thermally fused and are bonded together. As a result, a film-made housing 4 for hermetically accommodating the electrode assembly 1 is formed. Then, the electrode assembly 1 is inserted in the film-made housing 4, with one end of the positive lead 2 and one end of the negative lead 3 extending out thereof. Thereafter, the film-made housing 4 is sealed, and a thin battery 10 is obtained.

The total thickness of the electrode assembly and film-made housing of the thin battery (i.e, total thickness of the thin battery) is 1 mm or less, preferably 0.7 mm or less, further preferably 0.6 mm or less, and still further preferably 0.5 mm or less. If the total thickness of the electrode assembly and film-made housing of the thin battery is too thick, there would be reduced flexibility.

For the present embodiment, a detailed description is given on an exemplary example which uses a film-made housing formed by bonding together laminate films of the same kind. However, the film-made housing is not limited to the above constitution, and may also be a film-made housing formed by bonding together laminate films of different kinds, as illustrated in Fig. 4, in place of a film-made housing formed from laminate films of the same kind.

The film-made housing 4 illustrated in Fig. 4 uses: a first laminate film 21 including a thin gas barrier layer of an average thickness of 30 µm or less; and a second laminate film 22 including a thick gas barrier layer of an average thickness of 35 µm or more and having a higher tensile elastic modulus compared to the first laminate film. The second laminate film 22 is, for example, a laminate film with a thick metal foil such as a thick aluminum foil as the gas barrier layer. With respect to the film-made housing obtained by bonding together the first laminate film 21 and the second laminate film 22 at their corresponding peripheral edge portions, the first laminate film 21 contributes in remarkably improving the flexibility of the film-made housing; and the second laminate film 22 contributes in securing the gas barrier properties of the film-made housing. It is therefore possible to obtain a thin battery having a housing with excellent balance of gas barrier properties and flexibility. In this case, the film-made housing for the thin battery 20 is configured preferably such that when the battery is bent, the first laminate film would be positioned on the outer side of the battery; and the second laminate film would be positioned on the inner side of the battery. Such a configuration would secure sufficient flexibility for the thin battery.

The foregoing thin battery with excellent flexibility is used, without any particular limitation, as a power source for electronic devices that particularly require flexibility. To be specific, it is favorably used as a power source for an iontophoretic dermal administration device for use in contact with the skin of a living body; and as a power source for a biological information acquisition device for acquiring biological information.

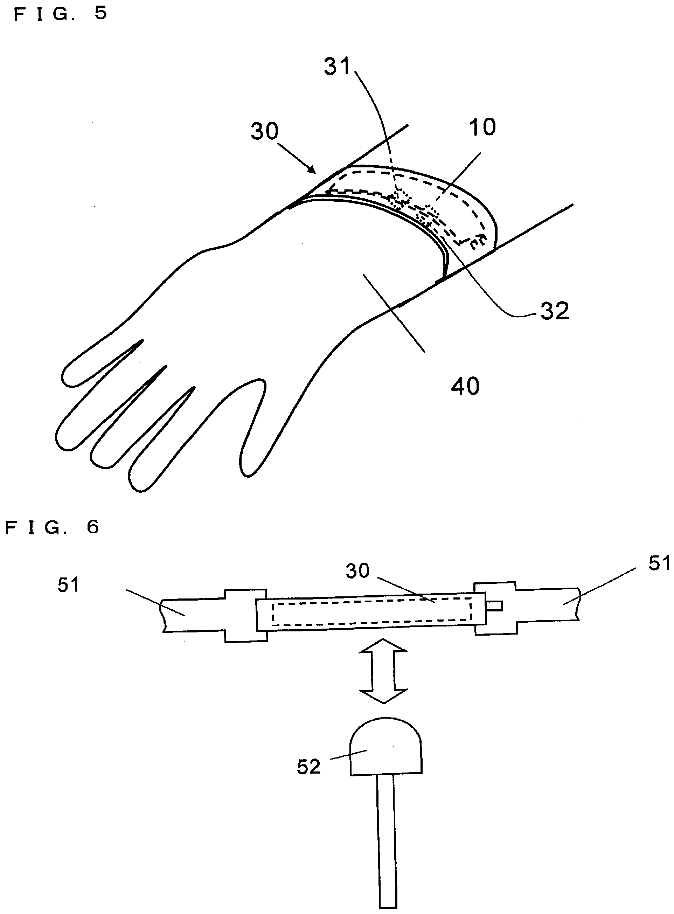

Fig. 5 is a conceptual and explanatory drawing illustrating one example of an iontophoretic dermal administration device 30 equipped with the thin battery 10 of the present embodiment, as the power source. The iontophoretic dermal administration device 30 having a positive terminal 31 and a negative terminal 32 is used attached to a human body, specifically to an arm 40 which is curved. Since the thin battery 10 has high flexibility, even when it is used as the power source for an electronic device requiring attachment to a curved part such as an arm of a human body, it can easily deform in accordance with the curved part.

### [Examples]

In the following, the present invention will be specifically described with reference to Examples. It is noted that only Examples 3, 5 and 6 are within the terms of the present invention. However, the present invention is not limited to these Examples.

### [Example 1]

### (this example does not fall within the claimed invention)

### (Production of electrode assembly)

Hundred parts by mass of electrolytic manganese dioxide serving as a positive electrode active material; 5 parts by mass of acetylene black serving as a conductive agent; and 5 parts by mass of polyvinylidene fluoride (PVDF) serving as a binder, were added to a proper amount of N-methyl-2-pyrollidone (hereafter NMP), and then mixed, to prepare a positive electrode material mixture paste. Then, the positive electrode material mixture paste was applied to both surfaces of a 15 µm-thick aluminum foil serving as a positive electrode current collector; and the resultant was dried, rolled, and then cut out to a 50 mm × 50 mm planar body having a 12 mm × 5 mm protruding portion, to obtain a positive electrode having the positive electrode current collector and positive electrode active material layers formed on both surfaces, respectively, thereof, with a total thickness of 215 µm. Thereafter, a positive lead made of aluminum was welded to the protruding portion of the positive electrode current collector

A copper foil (thickness: 20 µm) was punched out to a 50 mm × 50 mm planar body having a 12 mm × 5 mm protruding portion; and to one surface thereof (surface roughness: 2.6 µm), a lithium metal foil (50 mm × 50 mm, thickness: 20 µm) serving as a negative electrode active material was compression bonded at a line pressure of 100 N/cm. Thereafter, to one surface of a copper foil (surface roughness: 2.6 µm), same in shape as the foregoing copper foil except for its protruding portion being bilaterally (left/right) symmetrically positioned, a lithium metal foil (50 mm × 50 mm, thickness: 20 µm) serving as a negative electrode active material was compression bonded at a line pressure of 100 N/cm. Then, the protruding portions of the two copper foils were made to overlap with one another, and were then ultrasonically welded together. Thereafter, a negative lead made of copper, 3.0 mm in width and 20 mm in length, was ultrasonically welded to the protruding portions that had been welded together.

Subsequently, a polymer matrix was mixed with dimethyl carbonate (DMC) serving as a medium, such that polymer matrix : dimethyl carbonate = 5 : 95 (mass-to-mass ratio), to prepare a polymer matrix-containing solution. For the polymer matrix, a copolymer of hexafluoropropylene and polyvinylidene fluoride (hexafluoropropylene content: 7 mass%) was used. Then, the obtained polymer matrix-containing solution was uniformly applied to both surfaces of separators made of a microporous polyethylene, and also to the surfaces of the positive electrode active material layers. Then, the medium was volatilized, to allow the polymer matrix to be adhered to the positive electrode and the separators.

The negative electrodes were laminated to both surfaces, respectively, of the positive electrode, such that the negative electrode active material layers and the positive electrode active material layers faced one another, with the separators 35 µm in thickness to which the polymer matrix has been applied, interposed therebetween. Thereafter, the obtained laminate was hot pressed for one minute at 90ºC under 0.5 MPa, to produce a 370 µm-thick electrode assembly for a thin battery.

### [Production of thin battery]

A pouch-type body in sheet form was produced. The pouch-type body was made of a laminate film a having a total thickness of about 50 µm which comprised: a 15 µm-thick first resin film made of polyamide 6; a 35 µm-thick second resin film made of polyethylene; and a 0.05 µm-thick vapor-deposited layer of aluminum oxide, interposed between the first and second resin films. Specifically, the laminate film a was cut to two 60 mm × 65 mm rectangular-shaped pieces; and the two cut pieces of the laminate film a were made to overlap with one another, and were then heat sealed to one another at three of their corresponding sides. The sealed corresponding peripheral edge portions were each about 3 mm in width. Thus, a pouch-type body having one opening was formed.

Meanwhile, lithium perchlorate (LiClO₄) serving as an electrolytic salt was dissolved in a non-aqueous solvent obtained by mixing propylene carbonate (PC) and dimethoxyethane (DME) at a mass-to-mass ratio of 6:4, such that the resultant molarity was 1 mol/kg. Thus, a liquid electrolyte was prepared.

Then, the foregoing electrode assembly was inserted in the obtained pouch-type body, with the positive and negative leads extending out of the opening. Furthermore, the liquid electrolyte was injected therein from the opening, and then the opening was heat sealed. Thus, a thin battery A having a total thickness of about 0.5 mm, was obtained.

The polymer matrix that has been applied to the positive electrode and the separators turns into a gel polymer electrolyte, when impregnated with the liquid electrolyte.

### [Evaluation]

The obtained thin battery, electrode assembly, etc. were evaluated on their properties, etc. in the following manner.

### [Bending elastic modulus of electrode assembly]

The bending elastic modulus of the electrode assembly was measured in compliance with the measurement method of JIS K7171. Used as a test specimen, was the electrode assembly cut to be 50 mm in length, 50 mm in width, and 0.37 mm in thickness. Used as a supporting board, was a board with supports having a distance L of 30 mm therebetween and with a tip radius R of 2 mm. Moreover, an indenter with a tip radius R of 5 mm was moved toward the center portion of the test specimen at 100 mm/min, so as to apply a load thereto.

### [Tensile elastic modulus of laminate film]

The laminate film was cut out to a shape of a dumbbell-type JIS No. 3 test specimen for a tensile test having a width of 5 mm and a distance of 20 mm between gauge marks indicated thereon. A tensile test was performed on the test specimen with a universal testing machine at a tension speed of 5 mm/min, in compliance with JIS K7161, so as to obtain the tensile elastic modulus.

### [Flexibility of thin battery]

The flexibility of the thin battery was determined according to the evaluation obtained for the bending elastic modulus. Specifically, the bending elastic modulus of the thin battery was measured in compliance with the measurement method of JIS K7171. The obtained thin battery was directly used as the test specimen. Used as a supporting board, was a board with supports having a distance L of 30 mm therebetween and with a tip radius R of 2 mm. Moreover, an indenter with a tip radius R of 5 mm was moved toward the center portion of the test specimen at 100 mm/min, so as to apply a load thereto.

### [Battery capacity of thin battery]

In a 25ºC environment, the thin battery was discharged at a current density of 250 µA/cm² until the closed circuit voltage reached 1.8 V, so as to obtain the discharge capacity. The current density refers to the current per unit area of the positive electrode active material layer (i.e., the value resulting from dividing the output current by the total area of the two positive electrode active material layers).

### [Capacity retention rate after bending and storing]

In a 25ºC environment, the thin battery was discharged at a current density of 250 µA/cm² until the closed circuit voltage reached 3 V. Thereafter, as illustrated in Fig. 6, the heat-sealed and closed portions of the thin battery 30 (thin battery A) at both ends thereof were fixed to fixing members 51, respectively, the fixing members 51 being stretchable, and arranged such that they face each other and also align along a horizontal direction. Then, as illustrated in Fig. 6, a jig 52, having a curved portion with a 20 mm radius of curvature, was pressed to the thin battery 30, thus causing the thin battery 30 to deform by being bent along the curved portion. Thirty seconds later, the jig 52 was separated from the thin battery 30, and the deformation was removed. Such deformation through bending was repeated 10,000 times. Thereafter, the thin battery, on which such deformation through bending had been repeated 10,000 times, was stored for 90 days in a 60ºC environment.

Next, the thin battery, on which such deformation through bending and such 90-day storage had not been performed (thin battery with no bending or storing); and the thin battery, on which such deformation through bending was repeated 10,000 times and such 90-day storage was performed (thin battery after bending and storing), were each discharged at a current density of 250 µA/cm² in a 25ºC environment, until the closed circuit voltage reached 1.8 V, to obtain the discharge capacity. The capacity retention rate (%) after bending and storing was obtained by the following formula: "capacity retention rate (%) after bending and storing = (discharge capacity of thin battery after bending and storing/ discharge capacity of thin battery with no bending or storing) × 100". The results are shown in Table 1.

Do note that examples 1, 2, 4 and 7 actually do not form part of the claimed invention.

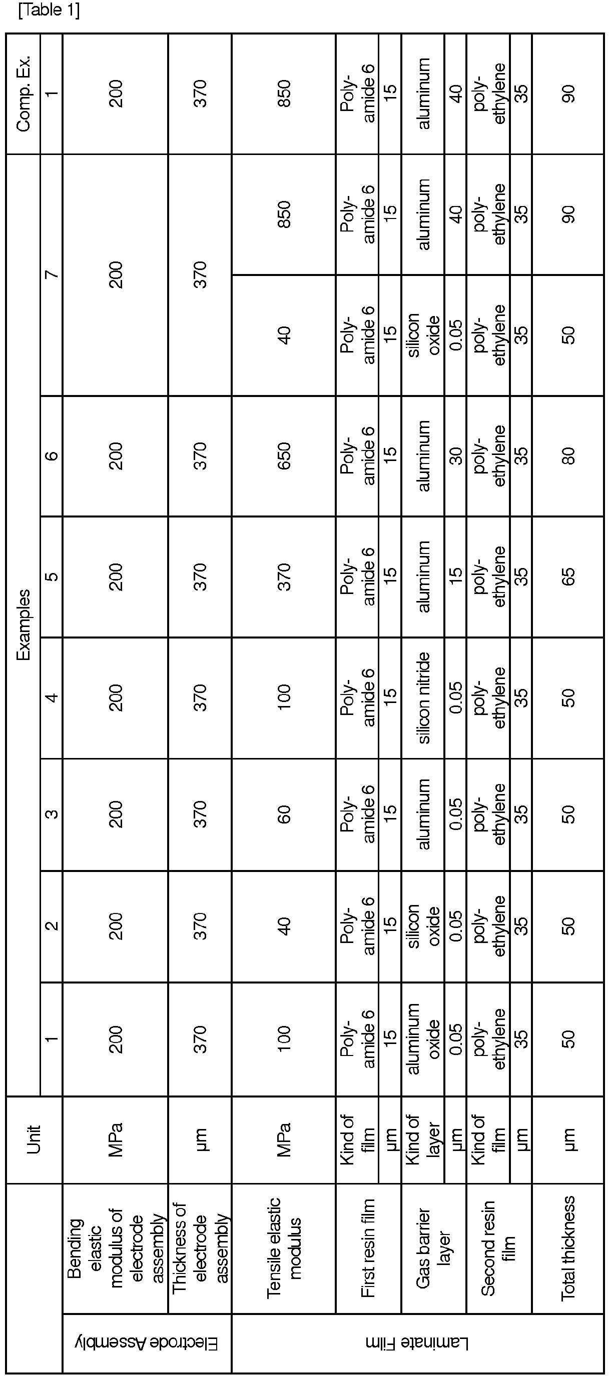

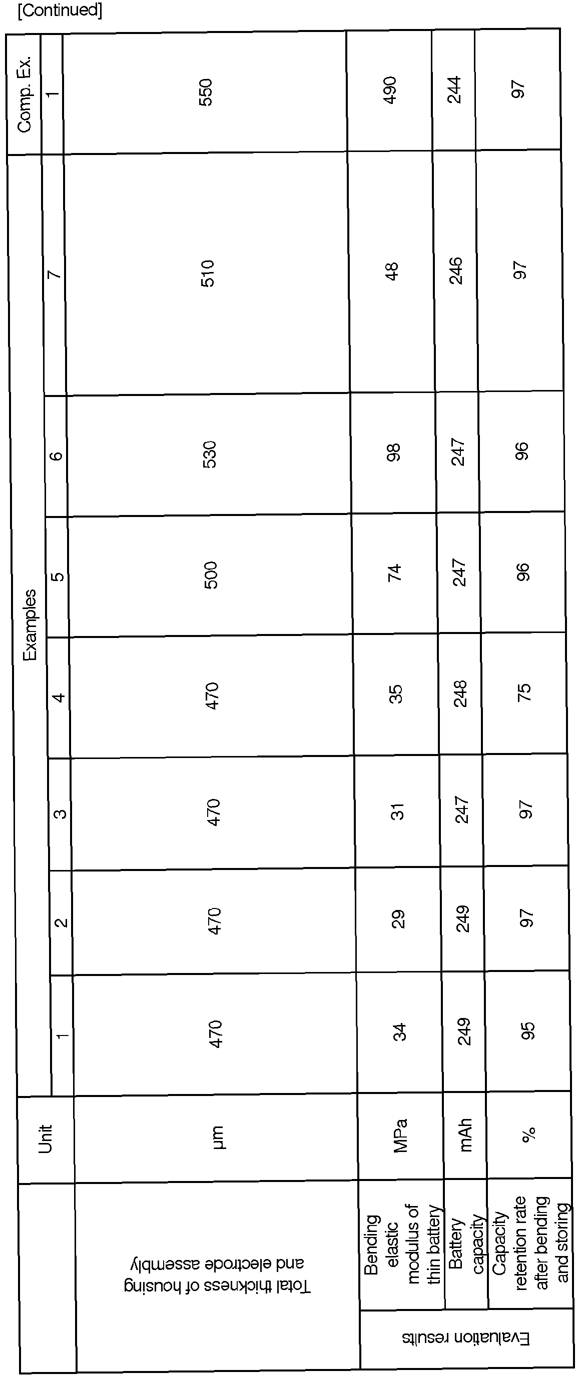

### [Example 2]

### (this example does not fall within the claimed invention)

A thin battery B was obtained and evaluated in the same manner as Example 1, except for using a laminate film b having a total thickness of about 50 µm and including a 0.05 µm-thick vapor-deposited layer of silicon oxide interposed between the first and second resin films; instead of using the laminate film a as in Example 1 including the 0.05 µm-thick vapor-deposited layer of aluminum oxide. The results are shown in Table 1.

### [Example 3]

A thin battery C was obtained and evaluated in the same manner as Example 1, except for using a laminate film c having a total thickness of about 50 µm and including a 0.05 µm-thick vapor-deposited layer of aluminum interposed between the first and second resin films; instead of using the laminate film a as in Example 1 including the 0.05 µm-thick vapor-deposited layer of aluminum oxide. The results are shown in Table 1.

### [Example 4]

### (this example does not fall within the claimed invention)

A thin battery D was obtained and evaluated in the same manner as Example 1, except for using a laminate film d having a total thickness of about 50 µm and including a 0.05 µm-thick vapor-deposited layer of silicon nitride interposed between the first and second resin films; instead of using the laminate film a as in Example 1 including the 0.05 µm-thick vapor-deposited layer of aluminum oxide. The results are shown in Table 1.

### [Example 5]

A thin battery E was obtained and evaluated in the same manner as Example 1, except for using a laminate film e having a total thickness of about 65 µm and including a 15 µm-thick aluminum foil layer interposed between the first and second resin films; instead of using the laminate film a as in Example 1 including the 0.05 µm-thick vapor-deposited layer of aluminum oxide. The results are shown in Table 1.

### [Example 6]

A thin battery F was obtained and evaluated in the same manner as Example 1, except for using a laminate film f having a total thickness of about 80 µm and including a 30 µm-thick aluminum foil layer interposed between the first and second resin films; instead of using the laminate film a as in Example 1 including the 0.05 µm-thick vapor-deposited layer of aluminum oxide. The results are shown in Table 1.

### [Example 7]

### (this example does not fall within the claimed invention)

A thin battery G was obtained and evaluated in the same manner as Example 1, except for using a pouch-type body comprising the laminate film b and a laminate film g. Among the two of the laminate films used to form the pouch-type body, one was a cut piece of the laminate film b as that in Example 2; and the other was a cut piece of the laminate film g having a total thickness of about 90 µm and including a 40 µm-thick aluminum foil layer interposed between the first and second resin films, instead of the laminate film a as in Example 1 including the 0.05 µm-thick vapor-deposited layer of aluminum oxide. The results are shown in Table 1.

### [Comparative Example 1]

A thin battery H was obtained and evaluated in the same manner as Example 1, except for using the laminate film g as that used in Example 7, for the two cut pieces of the laminate film for forming the pouch-type body. The results are shown in Table 1.

From Table 1, it is evident that the thin batteries according to the present invention obtained for Examples 1 to 7 all have excellent flexibility, their bending elastic modulus being 100 MPa or less. In contrast, it is evident that the thin battery of Comparative Example 1, in which the housing was a pouch-type body formed only from a laminate film including an aluminum foil as the gas barrier layer, has poor flexibility, its bending elastic modulus being 490 MPa. Moreover, it is evident that the thin battery has better flexibility when only a thin vapor-deposited film is used as the gas barrier layer, as in Examples 1 to 4; compared to when an aluminum foil is used as the gas barrier layer, as in Examples 5 to 7. Furthermore, the thin battery of Example 2, which used the silicon oxide film among the various vapor-deposited layers, has excellent flexibility in particular. The thin battery of Example 4, which used the silicon nitride film among the various vapor-deposited layers, results in having a low capacity retention rate after bending and storing, perhaps due to a slight deterioration in oxidation resistance.

### [Industrial Applicability]

Since the thin battery of the present invention has excellent flexibility, it can, for example, be used in contact with the skin of a living body. It is favorably used as the power source for devices such as an iontophoretic dermal administration device and a biological information acquisition device for acquiring biological information.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure.

### [Explanation of Reference Numerals]

- 1: electrode assembly
- 2: positive lead
- 3: negative lead
- 3a: wiring
- 4: film-made housing
- 5: positive electrode
- 5a: positive electrode active material layer
- 5b: positive electrode current collector
- 6: negative electrode
- 6a: negative electrode active material layer
- 6b: negative electrode current collector
- 7: electrolyte layer
- 10,20,30: thin battery
- 14: laminate film with vapor-deposited layer therein
- 14a: first resin film
- 14b: vapor-deposited film
- 14c: second resin film
- 21: first laminate film
- 22: second laminate film

## Claims

1. A thin battery (10; 20) comprising:
an electrode assembly (1) in sheet form comprising at least one electrode structure, the electrode structure being a laminate including: a positive electrode (5); two negative electrodes (6) arranged so as to sandwich the positive electrode (5); and two electrolyte layers (7), one interposed between the positive electrode (5) and one of the negative electrodes (6), and the other interposed between the positive electrode (5) and the other of the negative electrodes (6); and
a film-made housing (4) for hermetically accommodating the electrode assembly (1),
the positive electrode (5) including a positive electrode current collector (5b), and two positive electrode active material layers (5a) formed on both surfaces, respectively, of the positive electrode current collector (5b),
the negative electrodes (6) each including a negative electrode current collector (6b), and a negative electrode active material layer (6a) arranged on one surface of the negative electrode current collector (6b) so as to be in contact with the electrolyte layer (7),
the negative electrodes (6) being electrically connected to each other,
the electrode assembly (1) having a bending elastic modulus of 300 MPa or less as measured in compliance with the measurement method of JIS K7171, **characterized by** the film-made housing (4) being formed from a laminate film (14; 21, 22) comprising a first resin film (14a), and a gas barrier layer (14b) and a second resin film (14c) laminated in recited order on one surface of the first resin film (14a),
the gas barrier layer (14b) including a metal material,
the gas barrier layer (14b) having an average thickness of 30 µm or less, and
the electrode assembly (1) and the film-made housing (4), in total, having a thickness of 1 mm or less.

2. A thin battery (10; 20) comprising:
an electrode assembly (1) in sheet form comprising at least one electrode structure, the electrode structure being a laminate including: a negative electrode; two positive electrodes arranged so as to sandwich the negative electrode; and two electrolyte layers, one interposed between the negative electrode and one of the positive electrodes, and the other interposed between the negative electrode and the other of the positive electrodes; and
a film-made housing (4) for hermetically accommodating the electrode assembly (1),
the negative electrode including a negative electrode current collector, and two negative electrode active material layers formed on both surfaces, respectively, of the negative electrode current collector,
the positive electrodes each including a positive electrode current collector, and a positive electrode active material layer arranged on one surface of the positive electrode current collector so as to be in contact with the electrolyte layer, and
the positive electrodes being electrically connected to each other,
the electrode assembly (1) having a bending elastic modulus of 300 MPa or less as measured in compliance with the measurement method of JIS K7171, **characterized by** the film-made housing (4) being formed from a laminate film (14; 21, 22) comprising a first resin film (14a), and a gas barrier layer (14b) and a second resin film (14c) laminated in recited order on one surface of the first resin film (14a),
the gas barrier layer (14b) including a metal material,
the gas barrier layer (14b) having an average thickness of 30 µm or less, and
the electrode assembly (1) and the film-made housing (4), in total, having a thickness of 1 mm or less.

3. The thin battery (10; 20) in accordance with claim 1 or 2, wherein the gas barrier layer (14b) includes a vapor-deposited film of the metal material.

4. The thin battery (10; 20) in accordance with any one of claims 1 to 3, wherein the bending elastic modulus of the thin battery (10; 20) as measured in compliance with the measurement method of JIS K7171 is 200 MPa or less.

5. The thin battery (10; 20) in accordance with any one of claims 1 to 3, wherein the bending elastic modulus of the thin battery (10; 20) as measured in compliance with the measurement method of JIS K7171 is 100 MPa or less.

6. A device (30) for use in contact with the skin of a living body, said device (30) comprising the thin battery (10) in accordance with any one of claims 1 to 5 as a power source.

7. Use of the device (30) in accordance with claim 6 by bringing the device (30) in contact with the skin of a living body.

8. The use in accordance with claim 7, wherein the device (30) is attached to a curved part such as an arm (40) of a human body.

## Patentansprüche

1. Dünnbatterie (10; 20) mit:
einem Elektrodenaufbau (1) in Lagenform, der mindestens eine Elektrodenstruktur umfasst, wobei die Elektrodenstruktur ein Laminat ist, das Folgendes aufweist: eine positive Elektrode (5); zwei negative Elektroden (6), die so angeordnet sind, dass sie die positive Elektrode (5) in die Mitte nehmen; und zwei Elektrolytschichten (7), wobei eine zwischen der positiven Elektrode (5) und einer der negativen Elektroden (6) liegt und die andere zwischen der positiven Elektrode (5) und der anderen der negativen Elektroden (6) liegt; und
einem Filmgehäuse (4) zur hermetischen Unterbringung des Elektrodenaufbaus (1),
wobei die positive Elektrode (5) einen Positivelektroden-Stromabnehmer (5b) und zwei Positivelektroden-Aktivmaterialschichten (5a) aufweist, die auf jeweils beiden Oberflächen des Positivelektroden-Stromabnehmers (5b) ausgebildet sind,
wobei die negativen Elektroden (6) jeweils einen Negativelektroden-Stromabnehmer (6b) und eine Negativelektroden-Aktivmaterialschicht (6a) aufweisen, die so auf einer Oberfläche des Negativelektroden-Stromabnehmers (6b) angeordnet ist, dass sie sich mit der Elektrolytschicht (7) in Kontakt befindet,
wobei die negativen Elektroden (6) miteinander elektrisch verbunden sind,
wobei der Elektrodenaufbau (1), gemessen in Übereinstimmung mit dem Messverfahren von JIS K7171, ein elastisches Biegemodul von 300 MPa oder weniger hat,
**dadurch gekennzeichnet, dass**
das Filmgehäuse (4) aus einem Laminatfilm (14; 21, 22) ausgebildet ist, der einen ersten Harzfilm (14a) und eine Gassperrschicht (14b) und einen zweiten Harzfilm (14c), die in der angegebenen Reihenfolge auf einer Oberfläche des ersten Harzfilms (14a) auflaminiert sind, umfasst,
die Gassperrschicht (14b) einen Metallwerkstoff umfasst,
die Gassperrschicht (14b) eine mittlere Dicke von 30 µm oder weniger hat und
der Elektrodenaufbau (1) und das Filmgehäuse (4) insgesamt eine Dicke von 1 mm oder weniger haben.

2. Dünnbatterie (10; 20) mit:
einem Elektrodenaufbau (1) in Lagenform, der mindestens eine Elektrodenstruktur umfasst, wobei die Elektrodenstruktur ein Laminat ist, das Folgendes aufweist: eine negative Elektrode; zwei positive Elektroden, die so angeordnet sind, dass sie die negative Elektrode in die Mitte nehmen; und zwei Elektrolytschichten, wobei eine zwischen der negativen Elektrode und einer der positiven Elektroden liegt und die andere zwischen der negativen Elektrode und der anderen der positiven Elektroden liegt; und
einem Filmgehäuse (4) zur hermetischen Unterbringung des Elektrodenaufbaus (1),
wobei die negative Elektrode einen Negativelektroden-Stromabnehmer und zwei Negativelektroden-Aktivmaterialschichten aufweist, die auf jeweils beiden Oberflächen des Negativelektroden-Stromabnehmers ausgebildet sind,
wobei die positiven Elektroden jeweils einen Positivelektroden-Stromabnehmer und eine Positivelektroden-Aktivmaterialschicht aufweisen, die so auf einer Oberfläche des Positivelektroden-Stromabnehmers angeordnet ist, dass sie sich mit der Elektrolytschicht in Kontakt befindet, und
wobei die positiven Elektroden elektrisch miteinander verbunden sind,
wobei der Elektrodenaufbau (1), gemessen in Übereinstimmung mit dem Messverfahren von JIS K7171, ein elastisches Biegemodul von 300 MPa oder weniger hat,
**dadurch gekennzeichnet, dass**
das Filmgehäuse (4) aus einem Laminatfilm (14; 21, 22) ausgebildet ist, der einen ersten Harzfilm (14a) und eine Gassperrschicht (14b) und einen zweiten Harzfilm (14c), die in der angegebenen Reihenfolge auf einer Oberfläche des ersten Harzfilms (14a) auflaminiert sind, umfasst,
die Gassperrschicht (14b) einen Metallwerkstoff umfasst,
die Gassperrschicht (14b) eine mittlere Dicke von 30 µm oder weniger hat und
der Elektrodenaufbau (1) und das Filmgehäuse (4) insgesamt eine Dicke von 1 mm oder weniger haben.

3. Dünnbatterie (10; 20) gemäß Anspruch 1 oder 2, wobei die Gassperrschicht (14b) einen dampfabgeschiedenen Film des Metallwerkstoffs umfasst.

4. Dünnbatterie (10; 20) gemäß einem der Ansprüche 1 bis 3, wobei das elastische Biegemodul der Dünnbatterie (10; 20), gemessen in Übereinstimmung mit dem Messverfahren von JIS K7171, 200 MPa oder weniger beträgt.

5. Dünnbatterie (10; 20) gemäß einem der Ansprüche 1 bis 3, wobei das elastische Biegemodul der Dünnbatterie (10; 20), gemessen in Übereinstimmung mit dem Messverfahren von JIS K7171, 100 MPa oder weniger beträgt.

6. Vorrichtung (30) zur Verwendung in Kontakt mit der Haut eines lebenden Körpers, wobei die Vorrichtung (30) als eine Stromquelle die Dünnbatterie (10) gemäß einem der Ansprüche 1 bis 5 umfasst.

7. Verwendung der Vorrichtung (30) gemäß Anspruch 6, bei der die Vorrichtung (30) mit der Haut eines lebenden Körpers in Kontakt gebracht wird.

8. Verwendung gemäß Anspruch 7, wobei die Vorrichtung (30) an einem gekrümmten Teil, etwa einem Arm (40) eines menschlichen Körpers, angebracht wird.

## Revendications

1. Batterie mince (10 ; 20) comprenant :
un ensemble d'électrodes (1) en forme de feuille comprenant au moins une structure d'électrodes, la structure d'électrodes étant un stratifié comprenant : une électrode positive (5) ; deux électrodes négatives (6) agencées de manière à prendre en sandwich l'électrode positive (5) ; et deux couches d'électrolyte (7), l'une interposée entre l'électrode positive (5) et l'une des électrodes négatives (6), et l'autre interposée entre l'électrode positive (5) et l'autre des électrodes négatives (6) ; et
un logement réalisé par un film (4) pour loger hermétiquement l'ensemble d'électrodes (1),
l'électrode positive (5) comprenant un collecteur de courant d'électrode positive (5b), et deux couches de matériau actif d'électrode positive (5a) formées sur les deux surfaces, respectivement, du collecteur de courant d'électrode positive (5b),
les électrodes négatives (6) comprenant chacune un collecteur de courant d'électrode négative (6b), et une couche de matériau actif d'électrode négative (6a) agencée sur une surface du collecteur de courant d'électrode négative (6b) de manière à être en contact avec la couche d'électrolyte (7),
les électrodes négatives (6) étant connectées électriquement l'une à l'autre,
l'ensemble d'électrodes (1) ayant un module d'élasticité en flexion de 300 MPa ou moins, tel que mesuré conformément au procédé de mesure de la norme JIS K7171,
**caractérisée par**
le logement réalisé par un film (4) étant formé à partir d'un film stratifié (14 ; 21, 22) comprenant un premier film de résine (14a), et une couche de barrière aux gaz (14b) et un deuxième film de résine (14c) lamifiés dans l'ordre exposé sur une surface du premier film de résine (14a),
la couche de barrière aux gaz (14b) comprenant un matériau métallique,
la couche de barrière aux gaz (14b) ayant une épaisseur moyenne de 30 µm ou moins, et
l'ensemble d'électrodes (1) et le logement réalisé par un film (4) ayant une épaisseur totale de 1 mm ou moins.

2. Batterie mince (10 ; 20) comprenant :
un ensemble d'électrodes (1) en forme de feuille comprenant au moins une structure d'électrodes, la structure d'électrodes étant un stratifié comprenant : une électrode négative ; deux électrodes positives agencées de manière à prendre en sandwich l'électrode négative ; et deux couches d'électrolyte, l'une interposée entre l'électrode négative et l'une des électrodes positives, et l'autre interposée entre l'électrode négative et l'autre des électrodes positives ; et
un logement réalisé par un film (4) pour loger hermétiquement l'ensemble d'électrodes (1),
l'électrode négative comprenant un collecteur de courant d'électrode négative, et deux couches de matériau actif d'électrode négative formées sur les deux surfaces, respectivement, du collecteur de courant d'électrode négative,
les électrodes positives comprenant chacune un collecteur de courant d'électrode positive, et une couche de matériau actif d'électrode positive agencée sur une surface du collecteur de courant d'électrode positive de manière à être en contact avec la couche d'électrolyte, et
les électrodes positives étant connectées électriquement l'une à l'autre,
l'ensemble d'électrodes (1) ayant un module d'élasticité en flexion de 300 MPa ou moins tel que mesuré conformément au procédé de mesure de la norme JIS K7171,
**caractérisée par**
le logement réalisé par un film (4) étant formé à partir d'un film stratifié (14 ; 21, 22) comprenant un premier film de résine (14a), et une couche de barrière aux gaz (14b) et un deuxième film de résine (14c) lamifiés dans l'ordre exposé sur une surface du premier film de résine (14a),
la couche de barrière aux gaz (14b) comprenant un matériau métallique,
la couche de barrière aux gaz (14b) ayant une épaisseur moyenne de 30 µm ou moins, et
l'ensemble d'électrodes (1) et le logement réalisé par un film (4) ayant une épaisseur totale de 1 mm ou moins.

3. Batterie mince (10 ; 20) selon la revendication 1 ou 2, dans laquelle la couche de barrière aux gaz (14b) comprend un film déposé en phase vapeur du matériau métallique.

4. Batterie mince (10 ; 20) selon l'une quelconque des revendications 1 à 3,
dans laquelle le module d'élasticité en flexion de la batterie mince (10 ; 20), tel que mesuré conformément au procédé de mesure de la norme JIS K7171, est de 200 MPa ou moins.

5. Batterie mince (10 ; 20) selon l'une quelconque des revendications 1 à 3,
dans laquelle le module d'élasticité en flexion de la batterie mince (10 ; 20), tel que mesuré conformément au procédé de mesure de la norme JIS K7171, est de 100 MPa ou moins.

6. Dispositif (30) pour une utilisation en contact avec la peau d'un corps vivant, ledit dispositif (30) comprenant la batterie mince (10) selon l'une quelconque des revendications 1 à 5 en tant que source de puissance.

7. Utilisation du dispositif (30) selon la revendication 6 en amenant le dispositif (30) en contact avec la peau d'un corps vivant.

8. Utilisation selon la revendication 7, dans laquelle le dispositif (30) est attaché à une partie incurvée telle qu'un bras (40) d'un corps humain.
